# EUROPÄISCHE PATENTSCHRIFT

(11) **EP 2 986 434 B1**
(45) Veröffentlichungstag und Bekanntmachung des Hinweises auf die Patenterteilung: **07.06.2017**
(21) Anmeldenummer: 14714719.3
(22) Anmeldetag: 03.04.2014
(51) Int. Cl.: B29C 45/44

(54) **ENTFORMUNGSEINHEIT**
DEMOULDING DEVICE
DISPOSITIF DE DEMOULAGE

(30) Priorität: 18.04.2013 DE 102013207002
(43) Veröffentlichungstag der Anmeldung: 24.02.2016
(73) Patentinhaber: POLYTEC PLASTICS Germany GmbH & Co. KG, 49393 Lohne (DE)
(72) Erfinder: SEELHORST, Stefan, 49393 Lohne (DE)
(74) Vertreter: dompatent von Kreisler Selting Werner - Partnerschaft von Patent- und Rechtsanwälten mbB
(86) Internationale Anmeldenummer: PCT/EP2014/056641
(87) Internationale Veröffentlichungsnummer: WO 2014/170130

(56) Entgegenhaltungen:
- WO-A1-2008/102229
- DE-A1- 2 215 317
- DE-B1- 1 508 639
- JP-A- H08 336 867
- JP-U- S62 203 011
- US-A- 2 583 093
- US-A- 3 584 111

## Beschreibung

Die Erfindung betrifft eine Entformungseinheit für ein eine topfartige Vertiefung aufweisendes Spritzgussbauteil.

In Spritzgussbauteilen, wie beispielsweise Abdeckhauben für Kraftfahrzeugmotoren, können topfartige Vertiefungen vorgesehen sein. In derartigen Vertiefungen, die beispielsweise als Einfüllöffnungen für Flüssigkeiten wie Schmieröl verwendet werden, sind die insbesondere einen zylindrischen Querschnitt aufweisenden Vertiefungen derart ausgestaltet, dass zum Fixieren eines Verschlussdeckels in der Vertiefung beispielsweise an der Innenseite der Vertiefung nach innen vorstehende Ansätze vorgesehen sind, um beispielsweise entsprechend eines Bajonett-Verschlusses einen Verschlussdeckel in der Vertiefung fixieren zu können. Das Abdichten des Verschlussdeckels in der topfartigen Vertiefung kann über ein insbesondere ringförmig ausgebildetes Bodenteil der Vertiefung erfolgen. Durch ein ringförmig ausgebildetes Bodenteil ist einerseits innerhalb des Rings die Einfüllöffnung realisiert und andererseits eine Ringförmige Dichtfläche ausgebildet. Bei derartig komplex ausgestalteten Vertiefungen durch die gleichzeitig eine Dichtfläche für einen in der Vertiefung angeordneten Verschlussdeckel ausgebildet sein soll, handelt es sich um schwierig herzustellende Kunststoffspritzgussteile. Um die radial nach innen ragenden Ansätze in der topfartigen Vertiefung herzustellen sind entsprechend ausgestaltete Schieber bei der Entformungseinheit erforderlich. Dies führt dazu, dass an den ringförmigen Bodenelementen der Vertiefung, an der zumindest teilweise das Dichtelement des Verschlussdeckels anliegt, Entformungsgrate ausgebildet sind. Hierdurch ist die Dichtfunktion in dieser Fläche beeinträchtigt. Entformungseinheiten, mit denen innenliegende Ansätze entformt werden können, sind zum Beispiel aus der US3584111, der US2583093 sowie der DE2215317 bekannt.

Ein Entformungselement nach dem Oberbegriff des Anspruchs 1 ist aus der JP S62 203011 U, der WO2008/102229 oder der JPH08336867 entnehmbar.

Aufgabe der Erfindung ist es, eine alternative Entformungseinheit für ein eine derartige topfartige Vertiefung aufweisendes Spritzgussbauteil zu schaffen, die derart ausgebildet ist, dass an einem Bodenelement der Vertiefung eine gratfreie insbesondere ringförmige Dichtfläche ausgebildet ist.

Die Lösung der Aufgabe erfolgt erfindungsgemäß durch die Merkmale des Anspruchs 1.

Die erfindungsgemäße Entformungseinheit ist für eine topfartige Vertiefung entwickelt, die in einem Spritzgussbauteil vorgesehen ist. Hierbei handelt es sich insbesondere um eine im Wesentlichen zylindrische Vertiefung, die an einer Innenseite bzw. einer inneren Seitenwand mindestens einen Ansatz aufweist. Dieser vorzugsweise radial nach innen weisende Ansatz dient zur Verbindung mit einem Verschlussdeckel o. dgl., beispielsweise durch eine Art Bajonettverschluss. Ferner weist die Vertiefung eine Bodenseite oder Bodenfläche auf. Diese ist zumindest teilweise ringförmig ausgebildet, so dass eine innere durch den ringförmigen Boden ausgebildete Öffnung bspw. als Einfüllöffnung für eine Flüssigkeit dient und zumindest ein Teil der Bodenseite eine insbesondere ringförmige Dichtfläche ausbildet, die erfindungsgemäß gratfrei bzw. trennungsfrei ist.

Eine derartige gratfreie Dichtfläche trotz des Vorhandenseins eines radialen Ansatzes an der Innenwand der Vertiefung ist durch eine Entformungseinheit realisiert, die ein inneres Entformungselement aufweist. Dieses insbesondere durch Verschieben in die Vertiefung ein- und ausführbare Entformungselement weist eine insbesondere eben ausgestaltete Vorderseite auf. Diese Vorderseite dient zur Ausbildung desjenigen Bereichs der Bodenseite der Vertiefung, der als Dichtfläche dient. Die Vorderseite muss nicht den gesamten Bereich der Bodenseite ausbilden, jedoch zumindest den als Dichtfläche dienenden, ringförmigen Bereich der Bodenseite.

Zur Ausgestaltung des mindestens einen Ansatzes an der Innenseite der Vertiefung weist die Entformungseinheit mindestens ein Ansatz-Entformungselement auf. Dieses ist an einer Außenseite des inneren Entformungselements angeordnet und insbesondere in Umfangsrichtung des inneren Entformungselements verschiebbar, wobei durch ein Verschieben des Ansatz-Entformungselements ein Freigeben des mindestens einen Ansatzes erfolgt, so dass sodann das Ansatz-Entformungselement aus der Vertiefung herausgezogen werden kann.

Zur Verschiebung des mindestens einen Ansatzes-Entformungselements ist mit der Außenseite des inneren Entformungselements mindestens ein Halte-Freigabe-Element verbunden. Das Halte-Freigabe-Element dient einerseits zum Halten bzw. Fixieren des mindestens einen Ansatz-Entformungselements in einer Spritzposition, in der das Herstellen des Ansatzes an der Innenseite der Vertiefung erfolgt. Beim Entformen des Sprizgussbauteils, d.h. beim Herausziehen der Entformungseinheit aus der Vertiefung erfolgt durch das Halte-Freigabe-Element ein Freigeben des Ansatz-Entformungselements, so dass dies insbesondere in Umfangsrichtung des inneren Entformungselements verschoben werden kann und hierdurch mindestens einen an der Innenseite der Vertiefung ausgebildeten Ansatz freigibt. Mit Hilfe der erfindungsgemäßen Entformungseinheit ist es somit möglich eine komplexe Vertiefung auszugestalten, in die einerseits an ihrer Innenseite mindestens eine, insbesondere mehrere radial nach innen ragende Ansätze aufweist und zusätzlich an einer Bodenseite der Vertiefung eine ringförmige trennungsfreie Dichtfläche auszubilden.

Um auf einfache Weise eine insbesondere in Umfangsrichtung erfolgende Bewegung des mindestens einen Ansatz-Entformungselements zu realisieren ist es bevorzugt, dass mindestens eine Halte-Freigabe-Element eine in einem Winkel zu einer Mantellinie der Außenseite des inneren Entformungselements angeordnete Anlagefläche aufweist. Die Anlagefläche ist hierbei derart ausgerichtet, dass sie in Richtung des Ansatz-Entformungselements geneigt ist. Dies führt dazu, dass beim Herausziehen des inneren Entformungselements aufgrund der Neigung der Anlagefläche ein Freiraum entsteht, in den das Ansatz-Entformungselement verschoben werden kann.

Des Weiteren ist es bevorzugt, dass zur Ausbildung eines Ansatzes an der Innenseite der Vertiefung zwei Ansatz-Entformungselemente vorgesehen sind. Diese können insbesondere zwischen zwei Halte-Freigabe-Elementen angeordnet sein, so dass die beiden Ansatz-Entformungselemente nach einem zumindest teileweisen Herausziehen des inneren Entformungselements aufgrund der schrägen Anlageflächen in Umfangsrichtung auseinandergeschoben werden können. Hierdurch wird die Entformung des Ansatzes vereinfacht.

Da an der Innenseite der Vertiefung vorzugsweise mehrere Ansätze vorgesehen sind, ist es bevorzugt, dass die Halte-Freigabe-Elemente derart ausgebildet sind, dass sie zur Freigabe zweier Ansatz-Entformungselemente dienen. Hierzu weist das Halte-Freigabe-Element in bevorzugter Ausführungsform zwei einander gegenüberliegende Anlageflächen auf. Diese sind vorzugsweise wie vorstehend beschreiben in einem Winkel zur Mantellinie und geneigt zum Ansatz-Entformungselement angeordnet. Bevorzugt ist es daher, dass die beiden gegenüberliegenden Anlageflächen des Halte-Freigabe-Elements in Richtung der Vorderseite des inneren Entformungselements aufeinander zu laufen bzw. keilförmig ausgebildet sind.

Bei einer besonders bevorzugten Ausführungsform sind an der Außenseite des inneren Entformungselements mehrere bspw. vier Halte-Freigabe-Elemente angeordnet. Diese sind vorzugsweise regelmäßig am Umfang verteilt angeordnet. Bei besonders bevorzugten Ausführungsformen sind jeweils zwischen zwei benachbarten Halte-Freigabe-Elementen zwei Ansatz-Entformungselemente vorgesehen, die jeweils zur Ausbildung eines Ansatzes dienen.

Zur Freigabe der an der Innenseite der Vertiefung vorgesehenen insbesondere mehreren Ansätze erfolgt erfindungsgemäß ein Verschieben des mindestens einen Ansatz-Entformungselemets in Umfangsrichtung bzw. auf einer Kreisbahn. Erfindungsgemäß erfolgt dies durch ein an der Außenseite des inneren Entformungselements vorgesehenes Verschiebeelement. Hierbei kann je ein Ansatz-Entformungselement ein gesondertes Verschiebeelement oder beispielsweise auch ein gemeinsames Verschiebeelement für zwei benachbarte Ansatz-Entformungselemente vorgesehen sein.

Das Verschiebeelement wirkt mit dem zumindest einen Ansatz-Entformungselement derart zusammen, dass das Verschiebeelement beim Herausziehen des inneren Entformungselements aus der Vertiefung eine translatorische Bewegung des mindestens einen Ansatz-Entformungselements bewirkt. Ein derartiges Verschiebeelement kann bspw. ähnlich einer Kulissenführung ausgebildet sein. Hierzu weist das Verschiebeelement beispielsweise einen radial nach außen von der Außenseite des inneren Verformungselements vorstehenden Ansatz auf, der in eine Ausnehmung bzw. eine Bahn eingreift, die an dem Ansatz-Entformungselement vorgesehen ist. Selbstverständlich können der Ansatz auch an dem Ansatz-Entformungselement und die Ausnehmung in der Außenseite des inneren Entformungselements vorgesehen sein. Bevorzugt ist hierbei, dass der Ansatz oder die Ausnehmung eine zu einer Mantellinie der Außenseite des inneren Enformungselements in einem Winkel angeordnete Anlagefläche aufweist. Durch die Anlagefläche, die beispielsweise auch durch eine schräg verlaufende Kulissenbahn ausgebildet sein kann, erfolgt somit beim Herausziehen des inneren Entformungselements ein Verschieben des Ansatz-Entformungselements in Umfangsrichtung. Bei einer Ausgestaltung als Kulissenbahn kann diese insbesondere derart ausgebildet sein, dass beim Herausziehen des inneren Entformungselements zunächst kein Verschieben der Ansatz-Entformungselemente erfolgt und sodann erst beim weiteren Herausziehen des inneren Entformungselements die entsprechende Verschiebung des Ansatz-Entformungselements erfolgt. Hierdurch ist ein Verklemmen vermieden. Die Erfindung sieht vor, dass beim Herausziehen des inneren Entformungselements aus der Vertiefung das mindestens eine Ansatz-Entformungselement eine schraubenförmige Bewegung, d.h. eine Bewegung entlang einer schraubenförmigen Linie erfolgt. Beim Vorsehen von zwei Ansatz-Entformungselementen bzw. mehreren Paaren an Ansatz-Entformungselementen erfolgen vorzugsweise zwei gegenläufig schraubenförmige Bewegungen der Ansatz-Entformungselemente.

Nachfolgend wird die Erfindung anhand einer bevorzugten Ausführungsform unter Bezugnahme auf die anliegenden Zeichnungen näher erläutert.

Es zeigen:
- Fig. 1: eine schematische, perspektivische Ansicht eines Ausschnitts eines Spritzgussteils mit topfartiger Vertiefung,
- Fig. 2: eine schematische, perspektivische Ansicht der Entformungseinheit
- Fig. 3: eine schematische Ansicht einer Innenseite zweier benachbarter Ansatz-Entformungselemente,
- Fig. 4: eine schematische, perspektivische Ansicht des inneren Entformungselements und
- Fig. 5: eine schematische Seitenansicht der Entformungseinheit während des Entformungsvorgangs.

Ein Spritzgussteil, bei dem es sich beispielsweise um eine Zylinderkopfhaube handelt, weist eine topfartige Vertiefung 10 auf. Die topfartige Vertiefung 10 ist im Wesentlichen kreiszylindrisch. An einer Innenseite oder inneren Seitenwand 12 sind am Umfang verteilt mehrere radial nach innen ragende Ansätze 14 angeordnet. Die Ansätze 14 dienen zum Halten eines nicht dargestellten Verschlussdeckels bspw. über einem Bajonettverschluss. Eine Bodenseite 16 ragt von der Innenseite 12 radial nach innen und ist im dargestellten Ausführungsbeispiel ringförmig ausgebildet. Aufgrund der erfindungsgemäßen Entformungseinheit ist es möglich, dass ein innerer ringförmiger Bereich 18 eben ausgebildet und gratfrei ist. Der innere ringförmige Bereich 18 ist von einem ringförmigen, unterbrochenen Grat 20 umgeben. Durch einzelne Schieber und Elementen der Entformungseinheit werden in dem ringförmigen Bereich 18 weitere Grate 22, 24 ausgebildet.

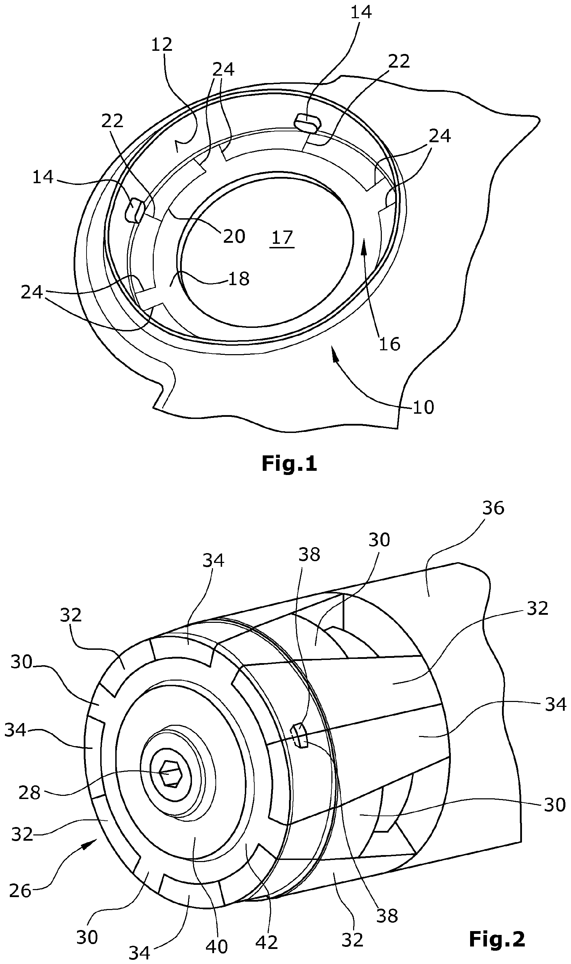

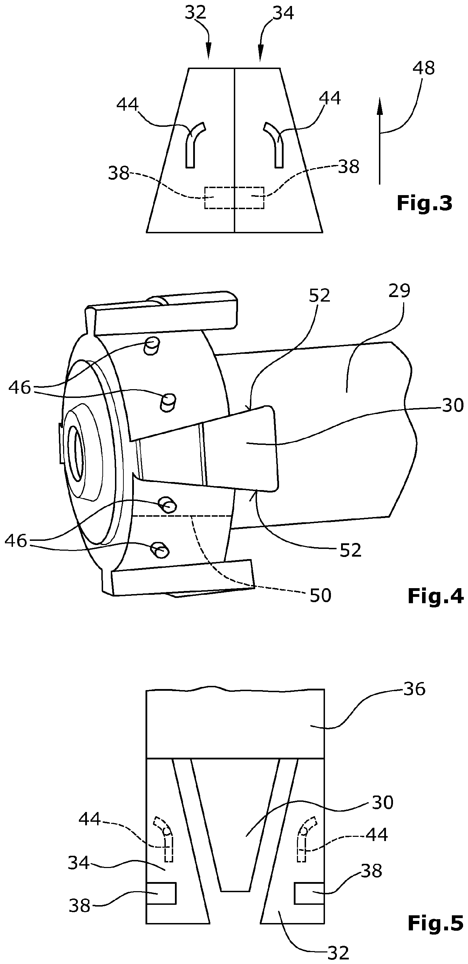

Die Entformungseinheit (Fig. 2 bis 5) weist zur Herstellung einer topfartigen Vertiefung 10 ein inneres Entformungselement 26 auf. Das Entformungselement 26 kann über eine Schraube 28 an einem zylindrischen Betätigungselement 29 (Fig. 4) fixiert oder auch einstückig mit diesem ausgebildet sein. Das innere Entformungselement weist im dargestellten Ausführungsbeispiel vier Halte-Freigabe-Elemente 30 auf. Zwischen den Halte-Freigabe-Elementen 30 sind in dem dargestellten Ausführungsbeispiel jeweils zwei Ansatz-Entformungselemente 32, 34 angeordnet. Des Weiteren ist der zylindrische Teil 29 über die Schraube 28 mit einem Betätigungselement 29 verbunden. Das zylindrische Element 29 des inneren Entformungselements ist von einem bspw. als Hohlzylinder ausgebildeten Halte-Element 36 (Fig. 2) umgeben.

Zur Ausbildung der Ansätze 40 an der Innenseite 12 der Vertiefung 10 weisen zwei benachbarte Ansatz-Entformungselemente 32, 34 jeweils eine Ausnehmung 38 auf, in die der Kunststoff zur Ausbildung der Ansätze 14 eingespritzt wird.

Zur Herstellung des Spritzgussbauteils mit der Vertiefung 10 wird in die Spritzgussform in der entsprechenden Stelle, an der die Vertiefung 10 ausgebildet werden soll, die Entformungseinheit in geschlossener Stellung (Fig. 2) eingeführt. Im nächsten Schritt erfolgt das Einspritzen des Kunststoffs. Hier wird insbesondere die Bodenseite mit der Einfüllöffnung 17 sowie auch die Innenseite 12 mit den im dargestellten Ausführungsbeispiel vier radial nach innen vorstehenden Ansätzen 14 ausgebildet. Hierbei wird die Öffnung 17 durch einen in Längsrichtung vorstehenden zylindrischen Ansatz 40 (Fig. 2) des inneren Entformungselements in Verbindung mit der entsprechenden Spritzgussform ausgebildet. Der gratfreie, ringförmige Bereich 16 wird von dem ringförmigen Bereich 42, der den Ansatz 40 umgibt, ausgebildet. Hieran schließt sich der ebenfalls ringförmige Bereich der mehrere Grate 22, 24 aufweist an. Dieser wird durch den ringförmigen Bereich außerhalb des Rings 42 ausgebildet. Die Grate 22, 24 entstehen entlang der in diese Richtung weisenden Berührungskanten zwischen den beiden Ansatz-Entformungselementen 32, 34. Die Grate 24 werden durch die entsprechenden Kanten zwischen den Halte-Freigabe-Elementen 30 und den jeweils benachbarten Ansatz-Entformungselementen 32, 34 gebildet. Entsprechend sind die ringsegmentförmigen Grate 20 durch die Kanten zwischen dem Ring 42 und den entsprechenden Kanten der Ansatz-Entformungselemente 32, 34 ausgebildet.

Zum Entformen wird in einem ersten Schritt das innere Entformungselement 26 in einer ersten Entformungsphase ein Stück aus der Vertiefung herausgezogen. In diesem ersten Entformungsschritt werden vorzugsweise weder die Ansatz-Entformungselemente 32, 34 noch das Halte-Element 36 bewegt. Zusammen mit dem inneren Entformungselement 26 werden die mit diesem fest verbundenen Halte-Freigabe-Elemente in der in Fig. 5 dargestellten Stellung aus der Vertiefung 10 herausgezogen bis die äußeren Seiten der Halte-Freigabe-Elemente an dem Halte-Element 36 anliegen.

Während dieser ersten Phase der Entformung werden die in diesem Ausführungsbeispiel acht Ansatz-Entformungselemente 32, 34 nun durch das Halte-Element 36, das beispielsweise federbelastet sein kann, in ihrer Lage gehalten.

Bei der weiteren Entformung wird das als Hülse ausgebildete Halte-Element zusammen mit dem inneren Entformungselement verschoben. Hierdurch erfolgt ein Freigeben der Ansatz-Entformungselemente. Diese können nunmehr insbesondere in Umfangsrichtung verschoben werden. Eine weitere Verschiebung erfolgt in diesem Ausführungsbeispiel durch eine Art Kulissenführung. Hierzu sind an den Innenseiten der Ansatz-Entformungselemente 32, 34 bahnförmige Ausnehmungen 44 vorgesehen, in die jeweils Stifte bzw. Pins 46 eingreifen. Aufgrund der Krümmung der Bahn 44 erfolgt bei einer Bewegung der Stifte 46 in Richtung eines Pfeils 48 (Fig. 3) ein Auseinanderschieben benachbarter Ansatz-Entformungselemente 32, 34, wie in Fig. 5 dargestellt.

## Patentansprüche

1. Entformungseinheit für ein eine topfartige Vertiefung (10) aufweisendes Spritzgussbauteil, wobei die Vertiefung (10) an einer Innenseite (12) mindestens einen Ansatz (14) aufweist, mit
einem verschiebbaren inneren Entformungselement (26) mit einer Vorderseite (42) zur Ausbildung einer trennungsfreien Bodenseite (16) der topfartigen Vertiefung (10),
mindestens einem Ansatz-Entformungselement (32, 34), das an einer Außenseite des inneren Entformungselements (26) angeordnet ist und mindestens einem mit der Außenseite des inneren Entformungselements (26) verbundenen Halte-Freigabe-Element (30) zum Halten des mindestens einen Ansatz-Enformungselements (34) in einer Spritzposition und zum Freigeben des mindestens einen Ansatz-Entformungselements (32, 34) zum Entformen durch ein Verschieben des inneren Entformungselements (26)
**dadurch gekennzeichnet, dass**
das innere Entformungselement (26) an seiner Außenseite ein Verschiebeelement (46) aufweist, das mit dem zumindest einen Ansatz-Entformungselement (32, 34) derart zusammenwirkt, dass das Verschiebeelement (46) beim Herausziehen des inneren Entformungelements (26) aus der Vertiefung (10) eine schraubenlinienförmige Bewegung des mindestens einen Ansatz-Entformungselements (32, 34) bewirkt.

2. Entformungselement nach Anspruch 1, **dadurch gekennzeichnet, dass** das Halte-Freigabe-Element (30) eine in einem Winkel zu einer Mantellinie (50) angeordnete zum Halte-Freigabe-Element (30) geneigte Anlagefläche (52) aufweist.

3. Entformungselement nach einem der Ansprüche 1 bis 2, **dadurch gekennzeichnet, dass** zwei Ansatz-Entformungselemente (32, 34) jeweils von einem gemeinsamen Halte-Freigabe-Element (30) betätigt werden, wobei das Halte-Freigabe-Element (30) vorzugsweise zwei einander gegenüberliegende Anlageflächen (52) aufweist.

4. Entformungselement nach Anspruch 3, **dadurch gekennzeichnet, dass** die beiden gegenüberliegenden Anlageflächen (52) in Richtung der Vorderseite (42) des inneren Entformungselements (26) aufeinander zulaufen.

5. Entformungselement nach einem der Ansprüche 1 bis 4, **dadurch gekennzeichnet, dass** zwischen zwei Halte-Freigabe-Elementen (30) zwei Ansatz-Entformungselemente (32, 34) angeordnet sind.

6. Entformungselement nach einem der Ansprüche 1 bis 5, **dadurch gekennzeichnet, dass** an der Außenseite des inneren Entformungselements (26) mehrere, insbesondere vier Halte-Freigabe-Elemente (30) vorzugsweise regelmäßig verteilt angeordnet sind.

7. Entformungselement nach einem der Ansprüche 1 bis 6, **dadurch gekennzeichnet, dass** die Ansatz-Entformungselemente (32,34) beim Entformen auf einer Kreislinie in Umfangsrichtung bewegt werden.

8. Entformungselement nach einem der Ansprüche 1 bis 7, **dadurch gekennzeichnet, dass** zwei Ansatz-Entformungselemente (32,34), insbesondere mindestens ein Paar an Ansatz-Entformungselementen (32,34) beim Herausziehen des Inneren Entformungselements aus der Vertiefung (10) gegenläufig schraubenlinienförmige Bewegungen durchführen.

9. Entformungselement nach einem der Ansprüche 1 bis 8, **dadurch gekennzeichnet, dass** das Verschiebeelement einen insbesondere radial nach außen weisenden Ansatz (46) aufweist, der in eine Ausnehmung (44) in dem Ansatz-Enformungselement (32, 34) greift.

10. Entformungselement nach Anspruch 9, **dadurch gekennzeichnet, dass** der Ansatz (46) und/oder die Ausnehmung (44) eine zu einer Mantellinie (52) der Außenseite des inneren Entformungselements (26) in einem Winkel angeordnete Anlagefläche aufweist.

11. Entformungselement nach einem der Ansprüche 1 bis 10 **dadurch gekennzeichnet, dass** ein Halteelement (36) vorgesehen ist, das das mindestens eine Ansatz-Entformungselement (32, 34) in einem ersten Umformungsschritt hält.

## Claims

1. A demoulding unit for an injection-molded component comprising a pot-like recess (10), the recess (10) comprising at least one projection (14) on an inner side (12), said demoulding unit comprising
a movable inner demoulding element (26) having a front side (42) for forming the burr-free bottom side (16) of the pot-like recess (10),
at least one projection demoulding element (32, 34) arranged on an outer side of the inner demoulding element (26), and
at least one holding/releasing element (30) connected to the outer side of the inner demoulding element (26), provided to hold the at least one projection demoulding element (34) in an injection position and to release the at least one projection demoulding element (32, 34) for demoulding by moving the inner demoulding element (26),
**characterized in that**
the inner demoulding element (26) comprises, on the outer side, a displacement element (46) cooperating with the at least one projection demoulding element (32, 34) in such a manner that, when the inner demoulding element (26) is pulled out from the recess (10), the displacement element (46) causes a helical movement of the at least one projection demoulding element (32, 34).

2. The demoulding element according to claim 1, **characterized in that** the holding/releasing element (30) comprises an abutment face (52) arranged at an angle to a surface line (50) and inclined relative to the holding/releasing element (30).

3. The demoulding element according to claim 1, **characterized in that** two projection demoulding elements (32, 34) are respectively actuated by a common holding/releasing element (30), the holding/releasing element (30) comprising two opposite abutment faces (52).

4. The demoulding element according to claim 3, **characterized in that** the two opposite abutment faces (52) extend toward each other in a direction of the front side (42) of the inner demoulding element (26).

5. The demoulding element according to one of claims 1 to 4, **characterized in that** two projection demoulding elements (32, 34) are arranged between two holding/releasing elements (30).

6. The demoulding element according to one of claims 1 to 5, **characterized in that** a plurality, in particular four holding/releasing elements (30) are arranged on the outer side of the inner demoulding element (26) preferably with even distribution.

7. The demoulding element according to one of claims 1 to 6, **characterized in that**, during demoulding, the projection demoulding elements (32, 34) are moved on a circular line in a circumferential direction.

8. The demoulding element according to one of claims 1 to 7, **characterized in that**, when the inner demoulding element is pulled out from the recess (10), two projection demoulding elements (32, 34), in particular a pair of projection demoulding elements (32, 34), perform helical movements in opposite directions.

9. The demoulding element according to one of claims 1 to 8, **characterized in that** the displacement element comprises a projection (46) which is in particular directed radially outward and engages with a cutout area (44) in the projection demoulding element (32, 34).

10. The demoulding element according to claim 9, **characterized in that** at least one of the projection (46) and the cutout area (44) comprise an abutment surface arranged at an angle to a surface line (52) of the outer side of the inner demoulding element (26).

11. The demoulding element according to one of claims 1 to 10, **characterized in that** a holding element (36) is provided for holding the at least one projection demoulding element (32, 34) during a first molding step.

## Revendications

1. Unité de démoulage pour un composant moulé par injection et présentant un renfoncement (10) en forme de pot, le renfoncement (10) présentant au moins une saillie (14) au niveau d'une face intérieure (12), avec :
- un élément de démoulage (26) intérieur, lequel peut coulisser, avec une face avant (42) en vue de la formation d'une partie de fond (16) sans aucune séparation du renfoncement (10) en forme de pot ;
- au moins un élément de démoulage en saillie (32, 34) qui est disposé au niveau d'une face extérieure de l'élément de démoulage (26) intérieur ; et
- au moins un élément de maintien et de déblocage (30) relié à la face extérieure de l'élément de démoulage (26) intérieur, destiné au maintien de l'au moins un élément de démoulage en saillie (34) dans une position d'injection et en vue du déblocage de l'au moins un élément de démoulage en saillie (32, 34) en vue du démoulage par l'intermédiaire d'un coulissement de l'élément de démoulage (26) intérieur,
**caractérisée en ce que**
l'élément de démoulage (26) intérieur présente un élément coulissant (46) au niveau de sa face extérieure, lequel interagit avec le tout au moins un élément de démoulage en saillie (32, 34), de telle sorte que l'élément coulissant (46) déclenche un mouvement hélicoïdal de l'au moins un élément de démoulage en saillie (32, 34), quand l'élément de démoulage (26) intérieur est extrait du renfoncement (10).

2. Élément de démoulage selon la revendication 1, **caractérisé en ce que** l'élément de maintien et de déblocage (30) présente une surface de contact (52) qui est inclinée vers l'élément de maintien et de déblocage (30) et disposée dans un angle par rapport à une génératrice de l'enveloppe (50).

3. Élément de démoulage selon l'une des revendications 1 à 2, **caractérisé en ce que** deux éléments de démoulage en saillie (32, 34) sont actionnés respectivement par un élément de maintien et de déblocage (30) commun, l'élément de maintien et de déblocage (30) présentant de préférence deux surfaces de contact (52) étant opposées l'une par rapport à l'autre.

4. Élément de démoulage selon la revendication 3, **caractérisé en ce que** les deux surfaces de contact (52) étant opposées l'une par rapport à l'autre convergent l'une vers l'autre en direction de la face avant (42) de l'élément de démoulage (26) intérieur.

5. Élément de démoulage selon l'une des revendications 1 à 4, **caractérisé en ce que** deux éléments de démoulage en saillie (32, 34) sont disposés entre deux éléments de maintien et de déblocage (30).

6. Élément de démoulage selon l'une des revendications 1 à 5, **caractérisé en ce que**, au niveau de la face extérieure de l'élément de démoulage (26) intérieur, plusieurs, en particulier quatre, éléments de maintien et de déblocage (30) sont disposés en étant répartis de préférence régulièrement.

7. Élément de démoulage selon l'une des revendications 1 à 6, **caractérisé en ce que**, lors du démoulage, les éléments de démoulage en saillie (32, 34) sont déplacés sur une ligne circulaire dans la direction périphérique.

8. Élément de démoulage selon l'une des revendications 1 à 7, **caractérisé en ce que** deux éléments de démoulage en saillie (32, 34), en particulier au moins une paire d'éléments de démoulage en saillie (32, 34) effectuent des mouvements hélicoïdaux en sens inverse quand l'élément de démoulage (26) intérieur est extrait du renfoncement (10).

9. Élément de démoulage selon l'une des revendications 1 à 8, **caractérisé en ce que** l'élément coulissant présente une saillie (46) orientée en particulier de manière radiale vers l'extérieur, laquelle vient se mettre en prise dans une cavité (44) se trouvant dans l'élément de démoulage en saillie (32, 34).

10. Élément de démoulage selon la revendication 9, **caractérisé en ce que** la saillie (46) et/ou la cavité (44) présentent une surface de contact disposée dans un angle par rapport à une génératrice de l'enveloppe (52) de la face extérieure de l'élément de démoulage (26) intérieur.

11. Élément de démoulage selon l'une des revendications 1 à 10 **caractérisé en ce qu'**un élément de maintien (36) est prévu, lequel maintient en place l'au moins un élément de démoulage en saillie (32, 34) dans une première phase de déformation.
